# EUROPEAN PATENT SPECIFICATION

(11) **EP 1 599 786 B1**
(45) Date of publication and mention of the grant of the patent: **29.11.2006**
(21) Application number: 04712975.4
(22) Date of filing: 20.02.2004
(51) Int. Cl.: G06F 3/023, G06F 3/033, G07F 7/10

(54) **VIRTUAL KEYBOARD**
VIRTUELLE TASTATUR
CLAVIER VIRTUEL

(30) Priority: 25.02.2003 BR 0300474
(43) Date of publication of application: 30.11.2005
(73) Proprietor: Banco Itaú S.A., Jabaquara, 04344-902 Sao Paulo - SP (BR)
(72) Inventor: JONGH, R. A. de, c/o Praça Alf. Egy. Souza Aranha, Sao Paulo - SP (BR)
(74) Representative: Schmidt, Steffen J.
(86) International application number: PCT/BR2004/000017
(87) International publication number: WO 2004/077194

(56) References cited:
- EP-A- 0 844 778
- WO-A-98/27518
- WO-A-02/101531
- DE-A1- 4 129 202

## Description

### Field of the Invention

The invention pertains to terminal machines. More particularly, the invention relates to terminal machines which utilize keyboard displays and a method of using the same.

### Background of the Invention

As computers have become more predominant in everyday life, it becomes evident that business in the near future will be transacted, in a larger part, on the electronic superhighway or the Internet. The convenience of shopping the Internet and the utilization of e-commerce has already begun to permeate our lives. Credit card transactions and product orders on the Internet are now commonplace. However, along with this newfound convenience, system security, user identification, and validation of user identification remain legitimate and primary concerns for users of the current systems.

Automated teller machines (ATM) and Internet Banking allow bank customers to conduct banking transactions with financial institutions from remote locations anywhere in the world. Bank customers access their accounts via various technologies (including ATM and Internet Banking terminals) in order to transact business and obtain proprietary information regarding their accounts. As a security measure, the financial institution issues each bank customer a personal identification number or PIN. The bank customer enters the PIN into a keypad operatively connected to a card reader or other device which reads user identification information magnetically encoded onto the check or ATM card, credit card or the like. The PIN and the user information are then communicated to the network of the financial institution, which then verifies the accuracy of the information. Upon verification of the bank customer's PIN and user information, the bank customer is allowed to conduct business with the financial institution.

In today's marketplace, four requirements are paramount in granting access to an authorized user of a protected resource: (1) authorized user identification, (2) verification of authorized user identification, (3) unauthorized user access rejection and (4) an appropriate level of security to protect the resource from unauthorized use. For example, when a user (authorized or unauthorized) wishes to withdraw funds from an ATM, a bank issued card is inserted into the ATM and the "card" is identified via data transferred from a magnetic strip or an electronic chip within the card to a system database. To verify that the user is the authorized user of the bank issued card inserted into the ATM, the ATM prompts the user to enter a Personal Identification Number (PIN) which is only issued to the authorized user by the grantor of the bank card. If the PIN entered by the user is identical to the PIN issued to the authorized user and also recorded in system database memory, the user is verified as the authorized user and the transaction is allowed to proceed. The security afforded by this transaction involves possession of the bank card issued to the authorized user, knowledge of the PIN code, an upper limit cash demand and card deactivation if a consecutive series of incorrect PINs are entered into the ATM system. Theoretically, this security system is adequate to prevent an unauthorized user from gaining access to an account, but unfortunately, unauthorized access to protected resources has become a billion dollar problem. The resolution of this problem lies in understanding the weaknesses of the present systems and how to effectively eliminate those weaknesses while simultaneously maintaining simplicity, security and efficiency.

As the PIN system of security became the standard for verification of an authorized user in both card and non-card based systems, authorized users were subsequently required to recall a plurality of PIN codes in order to gain access to protected resources and services. This problem of excessive recall was resolved on the user level by recording PIN codes in writing and carrying a copy for easy reference in a wallet or purse. However, this was a direct compromise of the intended security afforded by the PIN system and could result in easy unauthorized access to related accounts if the wallet or purse was stolen. The recall problem was addressed on the grantor level by allowing the use of personalized PINS, for example various PINS, totally dynamic PINs and other overlapping security measures. In this way, an authorized user could eliminate recalling a multitude of PIN codes by making all PIN codes identical. In other words, personalized PINs allowed an authorized user to utilize a single PIN code for all protected resources, and additionally, a PIN of personal choice. However, if the personalized PIN was easy to guess, such as the authorized user's birth date or phone number, an informed unauthorized user could gain access to all protected resources with a single intelligent guess. Today, the major disadvantage of personalized PINs is the requirement of identical code lengths with constant and unchanging characters, usually numerals. If unauthorized use of a resource is obtained by observing the PIN entry of the authorized user, said unauthorized user instantly gains access to all resources protected by said personalized PINs. Therefore, personalized PINs decrease the personal security of the authorized user due to the possible windfall associated with gaining unlawful possession of the authorized user's wallet or purse and subsequent access to all resources protected by personalized PINs. Gaining access to the Internet and e-commerce environments with an increased level of security has changed access code requirements with respect to code length and the alphanumeric mix of code characters. Since many Internet sites now require access codes of eight or more characters with a minimum of two numerals, or instead issue a code of their choosing of varied lengths, personalized PINs only resolved the excess PIN memory overload problem for a short period of time.

There are numerous well known methods to secure the privacy of a bank customer's PIN. For example, in addition to fixed keypads, advancements in graphical user interface (GUI) technology permit a bank customer can enter his or her PIN on a keypad or touchscreen. The bank customer is able to shield a potential defrauder from misappropriating the PIN. Typically, terminal keyboards, which are known in the art, are always displayed on the terminals at the same position and with the same disposition of the keys. As a result, a defrauder can watch the movements carried out by the bank customer while the PIN is typed and, thereby, recognize the typed numbers, since the keys and the numbers are always displayed on the same location on the ATM's terminal screen.

In addition, certain defrauders use the artifice of cleaning the touchscreen of the ATM terminal before a bank customer makes use of it. Such artifice allows the identification of a user's PIN through his fingerprints, which remain printed on the touchscreen after typing. After the user leaves the ATM, the defrauder checks the fingerprints, discovering the numbers pressed by the user, since the keys and the numbers are always displayed at the same position on the ATM terminal.

The virtual keyboard of the present invention addresses these and other limitations of the prior art by employing a virtual keyboard that provides an image of a compact keyboard on a display screen of a ATM terminal, with the purpose of avoiding frauds after the safety password is typed, as described in the previous paragraphs.

The available prior art references do not disclose or even suggest the solution to a fraud-proof keyboard as taught by the present invention.

Document WO 98/27518 A discloses a fraud-proof keyboard for an automatic banking terminal suitable for preventing the keys pressed on the keyboard by the person using the terminal during a bank operation from being detected and used to trace the personal identification code or other confidential user data. The keyboard comprises means that automatically and randomly vary, between two successive banking operations, the number and/or symbol associated with each key.

Document DE 4129202 A1 discloses a protection circuit for a personal identification number keypad, which uses a number of keys to enter PIN value, with indicated values varying in pseudo-random manner.

The keyboards of both documents WO 98/27518 and DE 4129202 A1 teach that at every new user access to the electronic terminal, the location of each number with relation to each key would be different. Such solution does not prevent an eavesdropper from identifying the digits of the user's access code when watching the keyboard in a sufficiently close manner so as to be able to view the characters displayed therein.

Document WO 02/101531 A discloses a keyboard for a handheld electronic device comprising a row of keys wherein each of said keys represents at least two alphanumeric characters and the characters of each key are positioned relative to the characters on adjacent keys so as to form a QWERTY or DVORAK layout.

In WO 02/101531 A, more than one value is assigned to each key of the keyboard. The objectives of such assignment are minimizing production costs and facilitate typing. According to such document, the configuration and the characters associated with each key remain constant. Therefore, an eavesdropper only needs to identify the sequence of keys pressed by the user in order to defraud the user's access to the electronic services.

With this keyboard configuration, it is not necessary to know the numbers composing the user's access code but only the sequence of keys pressed by the user to gain access to the user's electronic services.

Document EP 0844778 A discloses a radiophone comprising a user interface and a controller unit connected to the user interface, the user interface comprising a display and a keypad having at least one operation key whose function is controlled by the controller nut and is displayed in a predetermined area of the display. The function of said at least one operation key is displayed in a predetermined area of the display. The radiophone is capable of assuming a plurality of states in which a group of predetermined actions associated with the state concerned may be performed by said at least one operation key. The controller unit displays one of said group of actions as a default function in the predetermined area of the display.

Document EP 0844778 A discloses an intelligent key, whose functionality varies according to the radiophone status. Accordingly, the result originated by pressing the key while the phone is on a call is different from the one originated, for instance, by pressing the key while the phone is idle.

However, for a given phone status, the functionality associated with the key of the keyboard remains unchanged. Since there is only one functionality associated with each key, an eavesdropper watching the keyboard in a sufficiently close manner is able to identify the value associated with the key pressed by the user.

### Summary of the Invention

According to an embodiment of the invention, a method of providing access to electronic services via a secure access code. The method comprises the step of providing a keyboard comprising a predetermined number of keys, which are used to input a secure access code, the method being characterized by further comprising the steps of: associating at least two variables with each individual key, wherein the value of one or more of said variables may change from one access to another; displaying the variables to the user; selecting, by the user, each key which corresponds to each variable of his access code; comparing the values associated with each selected key with a code stored in a database; and allowing the user to access electronic services, if the values associated with the keys, as sequentially selected by the user, match the stored access code. The keyboard of the present invention can be either virtual, being displayed via a graphical user interface, or physical.

According to another embodiment of the invention, a keyboard, comprising a predetermined number of keys for inputting an access code; characterized in that at least two variables are associated with each key, wherein the user selects the keys based on the variables corresponding with some portion of the user's access code, being the variables able to change from one access to another. The keyboard can be either virtual, being displayed via a graphical user interface, or physical.

According to another embodiment of the invention, a secure access terminal for providing access to electronic services via a secure access code, the terminal comprising a graphical user interface, which allows a user to access secured electronic information, and a keyboard, characterized in that each key of the keyboard has at least two variables associated therewith; and the variables are assigned from a group of possible combinations of variables and those variables are associated with each of the keys, such that the user gains the right to perform certain transactions by selecting keys which have assigned variables that correspond to a secret code.

### Brief description of the drawings

In the accompanying drawings that form a part of the specification and are to be read in conjunction therewith, the present invention is illustrated by way of example and not limitation, with like reference numerals referring to like elements, wherein:
Figure 1 illustrates an example of a virtual keyboard, according to an embodiment of the invention;
Figure 2 illustrates another example of a virtual keyboard, according to an embodiment of the invention;
Figure 3 illustrates yet another example of a virtual keyboard, according to an embodiment of the invention;
Figure 4 is a further illustration of a virtual keyboard, according to an embodiment of the invention;
Figure 5 is a further embodiment of a virtual keyboard, according to an embodiment of the invention;
Figure 6 illustrates a flow diagram of an exemplary method, according to an embodiment of the invention; and
Figure 6(a) is an illustration of listing of characters, according to an embodiment of the invention.

### Detailed Description of the Invention

In the following detailed description, numerous specific details are set forth in order to provide a thorough understanding of the invention. However, it will be apparent to one of ordinary skill in the art that these specific details need not be used to practice the invention. In other instances, well known structures, interfaces, and processes have not been shown in detail in order not to unnecessarily obscure the invention.

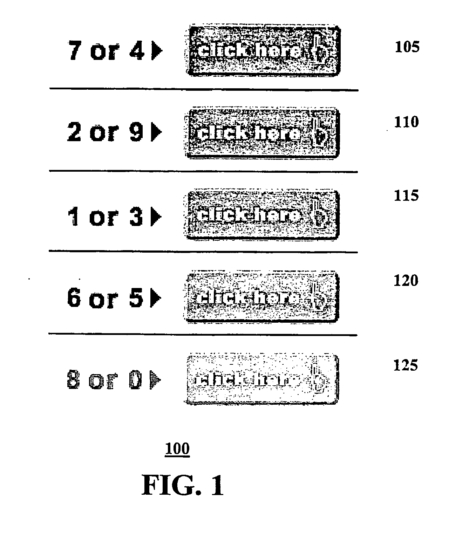

The method of the present invention, which may be software-implemented, consists of the generation of a virtual keyboard, as preferably illustrated in figures 1 to 6, on a monitor of an ATM terminal or any other computer terminal, for example, a personal computer or a portable computer.

Figure 1 illustrates a virtual keyboard 100, according to an embodiment of the invention. The virtual keyboard 100 provides five keys 105-125, however, one of ordinary skill in the art can readily appreciate that the figure is not meant to limit the scope of the invention and that any number of keys maybe utilized. Associated with each key 105-125 in the virtual keyboard 100, are a number of alphanumeric characters, which are displayed in relative proximity to each key 105-125. These characters are preferably numbers, as illustrated in the figure, but one of ordinary skill in the art can appreciate that they can also be combinations of letters, numbers or symbols. Also, one of ordinary skill in the art can appreciate that while the figure illustrates two characters associated with each key, this is not meant to limit the invention, but only for illustrative purposes.

As illustrated in Figure 1, the alphanumeric characters 7 and 4 are assigned to the first key 105, the alphanumeric characters 2 and 9 are assigned to the second key 110, the alphanumeric characters 1 and 3 are assigned to the third key 115, the alphanumeric characters 6 and 5 are assigned to the fourth key 120 and the alphanumeric characters 8 and 0 are assigned to the fifth key 125. Accordingly, in order to enter a password (for example, 723604), the user presses the first key 105 through though the fifth key 125, and pressing the first key 105. One of ordinary skill in the art can appreciate that there may be various different permutations of values based on the keys pressed.

As illustrated in the figure, there are more than one number assigned to each key. Thus when a user depresses keys which are associated with elements of the password there is a process to determine which of the possible values entered is the correct password. For example, if the user depresses keys to enter 723604, there are numerous possible combinations of passwords that arise (e.g., 491587). The system determines the possible password by either using stored password or an encrypted password. For example, suppose a user's secret password is 723604, and the keypad is configured as shown in Fig. 1. If the password is stored at a central computer, then a comparison is made between the stored password and the values input by the user. The system knows that the user pressed the first key indicating that either 7 or 4 are the first value of the password. The value 7 and then the value 4 are compared with the stored password and the value that corresponds to the password is retained. A decision is made for each digit of the password, thereby resolving the distinction between different possible passwords. If there is no match, then an incorrect password has been entered and the user is notified as such. Another technique involves the possibility that a central computer does not have access to the password. When a user opens an account with a financial institution, they choose a password that is encrypted and the encrypted value of the password is stored by the financial institution. When the user presses the keys which are associated with the password, the system tests all possible combinations of the characters using the same encryption method (for example, Triple DES) and compare the results of the stored encrypted value with the combinations of encrypted values.

These alphanumeric characters are maybe displayed around each one of the keys so as to help the visualization thereof, however one of ordinary skill in the art can select other positions of the keys, for example, being represented inside each one of the virtual keys 105-125.

In accordance with the invention, the system includes multiple keys and various characters assigned to the keys. These features allow a user several layers of protection against eavesdroppers or other types of fraud. For example, with various characters assigned to each key, the amounts of combinations which must be deduced by a potential eavesdropper are considerable. If a user typed each key during the process of entering his PIN number, then the eavesdropper must determine which number the customer intended to include, but also the proper sequence of buttons, since the combination of numbers per key will change when the defrauder access the terminal. Therefore, the invention provides a double layer of protection against fraudulent activity.

When a user utilizes the electronic terminal, the virtual keyboard 100 is displayed on a touch-screen (not shown). One of ordinary skilled in the art will recognize that there are numerous methods of displaying information to a user and that the type of display is not meant to limit the invention.

The user identifies the generated characters, which are assigned to each one of the five keys, and depresses the keys which correspond to the values of the PIN in order to have access to the electronic transactions.

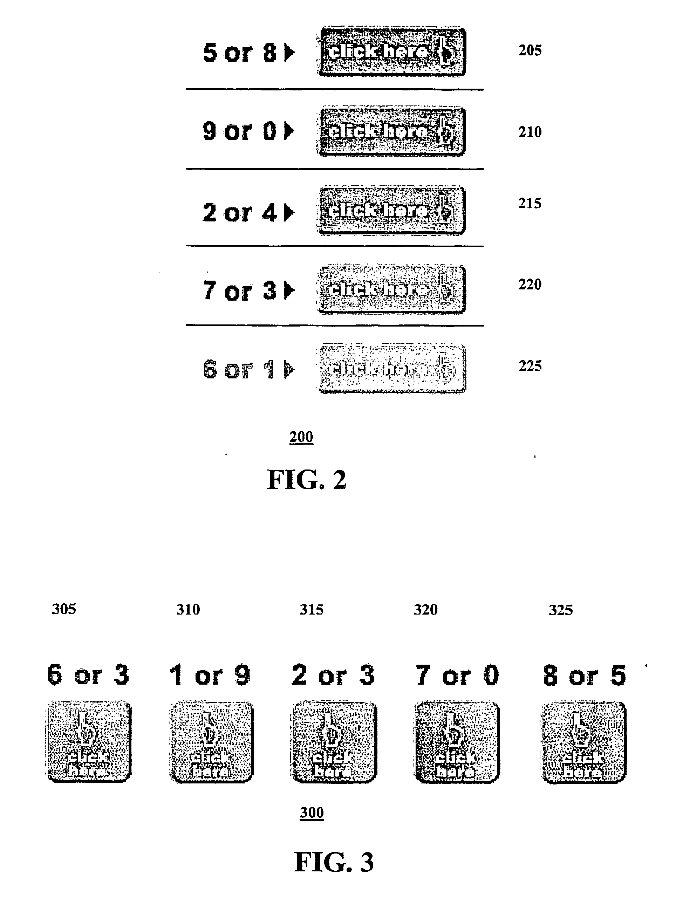

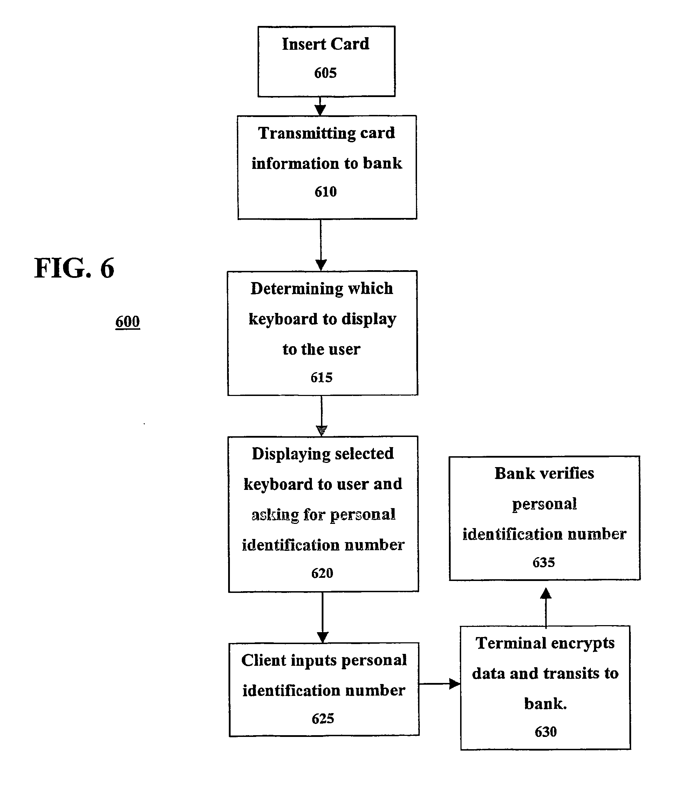

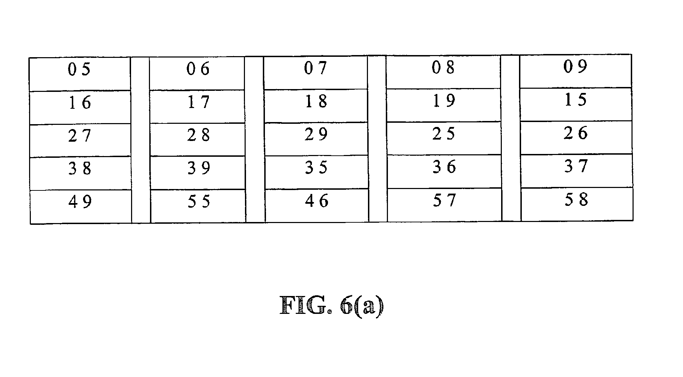

The keys 105-125 and associated characters together are regarded as one "screen." The screen may change from user to user or after a predetermined period of time. A screen may be assigned to a user for certain period of time. One of ordinary skill in the art can appreciate the various types of scenarios which may be proposed. The only variable in each screen is the values of the characters assigned to each key. As displayed in Figs. 1 and 2, the only difference between the figures is the values assigned to each key. For each screen there are ten total characters assigned to the keys. A central computer at a financial institution would store all the possible combinations of the ten characters that do not have repeating characters (for example, no two number 3's, because that would foster too much confusion among users and decipher the password). An example of the combinations of values is illustrated in Fig. 6(a). After a user's bank issued card has been authenticated, a screen is assigned to that user for a predetermined amount of time.

Typically, when a new user utilizes the terminal a new screen with a new combination of characters is displayed, the virtual keys remaining always at the same position. Figure 2 illustrates a new virtual keyboard 200 with a new combination of characters, according to the embodiment of the invention. The virtual keyboard 200 provides five keys 205-225, however, one of ordinary skill in the art can readily appreciate that the figure is not meant to limit the scope of the invention and that any number of keys maybe utilized.

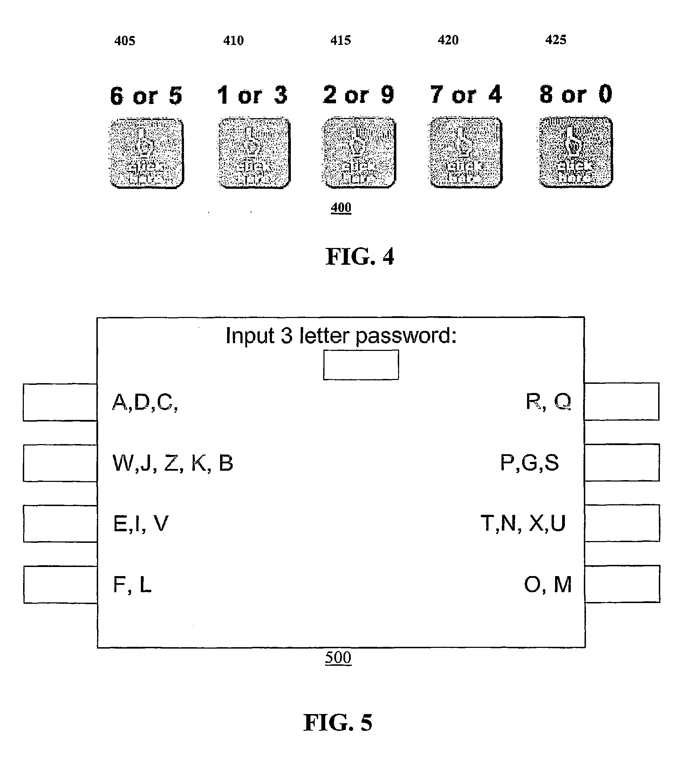

As will be shown in figures 3 and 4, the disposition of the keys of the virtual keyboard 200 on the touch-screen may not be rigid. The keyboard 200 maybe customized to the preferences of the majority of the users. As illustrated, the only difference between figure 1 and figure 2 is the combination of characters assigned to each one of the five keys. For example, in figure 1, the virtual keys 105-125 which show the figure of a hand beside the text "click here" are displayed in the same position, however, the numbers displayed around each one of the virtual keys vary from user to user, as may be illustrated in figure 2, where the keys disposition is the same, but the combination of numbers is different. Therefore, figures 1 and 2 show examples of virtual keyboards that would be displayed to two distinct users.

Figure 3 illustrates a virtual keyboard 300, according to an embodiment of the invention. The virtual keyboard 300 provides five keys 305-325, however, one of ordinary skill in the art can readily appreciate that the figure is not meant to limit the scope of the invention and that any number of keys maybe utilized. Associated with each key 305-325 in the keyboard 300, are pairs of characters, which are displayed around or inside each key 305-325. These characters are preferably numbers, as illustrated in the figure, but one of ordinary skill in the art can appreciate that they can also be combinations of letters or of letters and numbers. As shown in the figure, the keys 305-325 are display in a horizontal configuration across the screen.

Figure 4 also illustrates a horizontal configuration of the keyboard 400. However, figure 4 illustrates a keyboard 400 in which the characters assigned to each key 405-425 have been reconfigured to be displayed to a new user.

Figure 5 illustrates an alternate embodiment of the invention. The figure illustrates a keyboard 500, which has the keys outside of the screen. The screen illustrates various characters which represent elements of a personal identification number (PIN) and a box which shows the selected characters. The keys are lined up in a manner such that as to be associated with various characters. For example, the first key (on the top left) is associated with the characters A, C and D. The characters A, C and D are shown on the screen. The screen illustrates the characters and a box that would indicate the number of characters has been depressed. A user would select the button that corresponded to the element of the PIN and either the number or a character would appear in the box.

Figure 6 illustrates a flow diagram of a method 600 of accessing a secured terminal, according to an embodiment of the invention. In step 605, a user approaches the terminal, decides to perform at least one banking transaction via the terminal and inserts a bank issued card into the terminal machine.

In step 610, the terminal reads information from the bank issued card and transmits it to a bank computer (not shown). Typically, the information is encrypted according to a well-known encryption method. The bank computer determines and logs that the user who is associated with the bankcard is using a terminal machine.

In step 615, the system determines which keypad will be displayed to the user. Because the user selects a key which corresponds to at least two characters, there are a certain number values which can be associated with each key. For example, there are two characters associated with each key (as shown in Figs. 1). The computer stores predetermined lists of characters such that no single number is assigned twice to the same key. Each "screen" contains two columns of numbers between 0-9. There are 945 possible combinations of screens that exist.

In step 620, the bank computer selects a screen at random and displays the screen to user, in a manner similar to Figs 1 and 2.

In step 625, the user inputs the secret password. The user depresses the keys which a numbers associated with the secret passwords.

In step 630, the terminal machine encrypts the data associated with secret password and transmits it to the bank computer. The data is encrypted in a manner known to one of ordinary skill in the art.

In step 635, the bank computer verifies the user's secret password information and allows the user to perform predetermined banking transactions with the bank.

## Claims

1. Method of providing access to electronic services via a secure access code, comprising the step of: (i) providing a keyboard (100, 200, 300, 400, 500) comprising a predetermined number of keys, which are used to input a secure access code, the method being **characterized by** further comprising the steps of:
(ii) associating at least two variables with each individual key, wherein the value of one or more of said variables may change from one access to another;
(iii) displaying the variables to the user;
(iv) selecting, by the user, each key which corresponds to each variable of his access code;
(v) comparing the values associated with each selected key with a code stored in a database; and
(vi) allowing the user to access electronic services, if the values associated with the keys, as sequentially selected by the user, match the stored access code.

2. Method of claim 1, **characterized in that** in step (v) each value associated with each selected key that matches the corresponding portion of the user's access code is retained; and **in that** in step (vi) if the values retained for the keys, as sequentially selected by the user, match the stored access code then the user is allowed to access electronic services.

3. Method of any claims 1 or 2, **characterized in that** the variables of step (ii) change after a predetermined period of time.

4. Method of any claims 1 to 3, **characterized in that** the keyboard is a physical keyboard (500).

5. Method of any claims 1 to 3, **characterized in that** the keyboard is a virtual keyboard (100, 200, 300, 400).

6. Method of claim 5, **characterized in that** the virtual keyboard is displayed via a graphical user interface.

7. Method of any claims 5 or 6, **characterized in that** the virtual keyboard is comprised by five keys (105, 110, 115, 120, 125; 205, 210, 215, 220, 225; 305, 310, 315, 320, 325; 405, 410, 415, 420, 425).

8. Method of any claims 1 to 7, **characterized in that** the user is notified when the selected keys and the stored code do not match.

9. Method of any claims 1 to 8, **characterized in that** the electronic services are banking functions.

10. Method of any claims 1 to 9, **characterized in that** the variables are alphanumeric characters.

11. Method of any claims 1 to 9, **characterized in that** the variables are numbers.

12. Method of any claims 1 to 9, **characterized in that** the variables are letters.

13. Method of any claims 1 to 9, **characterized in that** the variables are a combination of letters and numbers.

14. Method of any claims 1 to 9, **characterized in that** the variables are symbols.

15. Method of any claims 1 to 14, **characterized in that** a group of variables is selected and displayed for each user.

16. Method of claim 15, **characterized in that** the group of variables is generated by a predetermined sequence.

17. Method of claim 15, **characterized in that** the group of variables is associated with the keys in accordance with a random sequence of combination of values.

18. Method of any claims 1 to 17, **characterized in that** the method is implemented in a secure access terminal.

19. Method of any claims 1 to 18, **characterized in that** a predetermined keyboard is displayed for a user.

20. Method of any claims 1 to 19, **characterized by** further comprising the step of inserting a bank issued card into a terminal to execute a transaction (605).

21. Method of any claims 1 to 20, **characterized by** further comprising the step of requesting the user's access code (620).

22. Method of claim 20, **characterized by** further comprising the steps of:
transmitting card information to a server (610);
verifying the authenticity of the bank issued card; and
determining which keyboard to display to the user (615).

23. Method of any claims 1 to 22, **characterized by** further comprising the steps of:
iv.a) encrypting the user's access code data; and
iv.b) transmitting the data to a server (630).

24. Keyboard (100, 200, 300, 400, 500) for providing access to electronic services via a secure access code, comprising:
a predetermined number of keys for inputting an access code (105, 110, 115, 120, 125; 205, 210, 215, 220, 225; 305, 310, 315, 320, 325; 405, 410, 415, 420, 425; 500); the keyboard being **characterized in that** at least two variables are associated with each key and displayed to the user, wherein the user sequentially selects the keys corresponding to all the variables of his access code, the variables being able to change from one access to another, wherein the values associated with each selected key are compared with a code stored in a database and the access to electronic services is allowed to the user, if the values associated with the keys, as sequentially selected by the user, match the stored access code.

25. Keyboard of claim 24, **characterized in that** the variables may change after a predetermined period of time.

26. Keyboard of any claims 24 to 25, **characterized in that** the keyboard is a virtual keyboard.

27. Keyboard of claim 26, **characterized in that** the virtual keyboard is displayed via a graphical user interface.

28. Keyboard of any claims 24 to 25, **characterized in that** the keys are physical.

29. Keyboard of claim 28, **characterized in that** the keys are placed outside of the screen.

30. Keyboard of claim 29, **characterized in that** the variables are displayed inside of the screen.

31. Keyboard of any claims 24 to 30, **characterized by** comprising five keys.

32. Keyboard of any claims 24 to 31, **characterized in that** the variables are alphanumeric characters.

33. Keyboard of any claims 24 to 31, **characterized in that** the variables are numbers.

34. Keyboard of any claims 24 to 31, **characterized in that** the variables are letters.

35. Keyboard of any claims 24 to 31, **characterized in that** the variables are a combination of letters and numbers.

36. Keyboard of any claims 24 to 31, **characterized in that** the variables are symbols.

37. Keyboard of any claims 24 to 36, **characterized in that** a group of variables is selected and displayed for each user.

38. Keyboard of claim 37, **characterized in that** the group of variables is generated by a predetermined sequence.

39. Keyboard of claim 37, **characterized in that** the group of variables is associated with the keys in accordance with a random sequence of combination of values.

40. Keyboard of any claims 24 to 39, **characterized in that** a predetermined keyboard is displayed for a user.

41. Keyboard of any claims 24 to 40, **characterized in that** the keyboard is implemented in a secure access terminal.

42. A secure access terminal for providing access to electronic services via a secure access code, the terminal comprising a graphical user interface, which allows a user to access secured electronic information, and a keyboard as defined in any of claims 24 to 41.

## Patentansprüche

1. Verfahren zum Bereitstellen eines Zugangs zu elektronischen Dienstleistungen über einen sicheren Zugangscode, aufweisend die folgenden Schritte:
(i) Bereitstellen einer Tastatur (100, 200, 300, 400, 500), die eine vorbestimmte Anzahl an Tasten aufweist, welche dazu verwendet werden, einen sicheren Zugangscode einzugeben, wobei das Verfahren **dadurch gekennzeichnet ist, dass** es ferner die folgenden Schritte aufweist:
(ii) Zuordnen mindestens zweier Variabler zu jeder einzelnen Taste, wobei der Wert einer oder mehrerer der Variablen sich von einem Zugang zum anderen ändern kann;
(iii) Anzeigen der Variablen dem Nutzer;
(iv) Auswählen, durch den Nutzer, jeder Taste, die jeder Variable seines Zugangscodes entspricht;
(v) Vergleichen der jeder ausgewählten Taste zugeordneten Werte mit einem in einer Datenbank gespeicherten Code; und
(vi) es dem Nutzer ermöglichen, auf die elektronischen Dienstleistungen zuzugreifen, falls die den Tasten zugeordneten Werte, wie sie aufeinanderfolgend durch den Nutzer ausgewählt worden sind, mit dem gespeicherten Zugangscode übereinstimmen.

2. Verfahren nach Anspruch 1, **dadurch gekennzeichnet, dass** in Schritt (v) jeder Wert, der jeder ausgewählten Taste zugeordnet ist, welcher dem zugehörigen Teil des Zugangscodes des Nutzer zugeordnet wird, zurückbehalten wird; und dass in Schritt (vi), falls die für die Tasten zurückbehaltenen Werte, wie sie aufeinanderfolgend durch den Nutzer ausgewählt worden sind, mit dem gespeicherten Zugangscode übereinstimmen, es dann dem Nutzer ermöglicht wird, auf die elektronischen Dienstleistungen zuzugreifen.

3. Verfahren nach einem der Ansprüche 1 oder 2, **dadurch gekennzeichnet, dass** die Variablen von Schritt (ii) sich nach einer vorbestimmten Zeitdauer ändern.

4. Verfahren nach einem der Ansprüche 1 bis 3, **dadurch gekennzeichnet, dass** die Tastatur eine gegenständliche Tastatur (500) ist.

5. Verfahren nach einem der Ansprüche 1 bis 3, **dadurch gekennzeichnet, dass** die Tastatur eine virtuelle Tastatur (100, 200, 300, 400) ist.

6. Verfahren nach Anspruch 5, **dadurch gekennzeichnet, dass** die virtuelle Tastatur über eine grafische Nutzerschnittstelle angezeigt wird.

7. Verfahren nach einem der Ansprüche 5 oder 6, **dadurch gekennzeichnet, dass** die virtuelle Tastatur fünf Tasten umfasst (105, 110, 115, 120, 125; 205, 210, 215, 220, 225; 305, 310, 315, 320, 325; 405, 410, 415, 420, 425).

8. Verfahren nach einem der Ansprüche 1 bis 7, **dadurch gekennzeichnet, dass** der Nutzer benachrichtigt wird, wenn die ausgewählten Tasten und der gespeicherte Code nicht übereinstimmen.

9. Verfahren nach einem der Ansprüche 1 bis 8, **dadurch gekennzeichnet, dass** die elektronischen Dienstleistungen Bankfunktionen sind.

10. Verfahren nach einem der Ansprüche 1 bis 9, **dadurch gekennzeichnet, dass** die Variablen alphanumerische Zeichen sind.

11. Verfahren nach einem der Ansprüche 1 bis 9, **dadurch gekennzeichnet, dass** die Variablen Zahlen sind.

12. Verfahren nach einem der Ansprüche 1 bis 9, **dadurch gekennzeichnet, dass** die Variablen Buchstaben sind.

13. Verfahren nach einem der Ansprüche 1 bis 9, **dadurch gekennzeichnet, dass** die Variablen eine Kombination von Buchstaben und Zahlen sind.

14. Verfahren nach einem der Ansprüche 1 bis 9, **dadurch gekennzeichnet, dass** die Variablen Symbole sind.

15. Verfahren nach einem der Ansprüche 1 bis 14, **dadurch gekennzeichnet, dass** eine Gruppe von Variablen ausgewählt und jedem Nutzer angezeigt wird.

16. Verfahren nach Anspruch 15, **dadurch gekennzeichnet, dass** die Gruppe von Variablen mittels einer vorbestimmten Folge erzeugt wird.

17. Verfahren nach Anspruch 15, **dadurch gekennzeichnet, dass** die Gruppe von Variablen den Tasten gemäß einer zufälligen Folge einer Kombination von Werten zugeordnet wird.

18. Verfahren nach einem der Ansprüche 1 bis 17, **dadurch gekennzeichnet, dass** das Verfahren in einem sicheren Zugangsendgerät implementiert wird.

19. Verfahren nach einem der Ansprüche 1 bis 18, **dadurch gekennzeichnet, dass** einem Nutzer eine vorbestimmte Tastatur angezeigt wird.

20. Verfahren nach einem der Ansprüche 1 bis 19, **gekennzeichnet durch** weiteres Aufweisen des Schritts des Einführens einer von einer Bank ausgegebenen Karte in ein Endgerät, um eine Transaktion durchzuführen (605).

21. Verfahren nach einem der Ansprüche 1 bis 20, **gekennzeichnet durch** weiteres Aufweisen des Schritts des Anforderns des Zugangscodes des Nutzers (620).

22. Verfahren nach Anspruch 20, **gekennzeichnet durch** weiteres Aufweisen der folgenden Schritte:
Übermitteln einer Karteninformation an einen Server (610);
Überprüfen der Echtheit der von der Bank ausgegebenen Karte; und
Bestimmen, welche Tastatur dem Nutzer anzuzeigen ist (615).

23. Verfahren nach einem der Ansprüche 1 bis 22, **gekennzeichnet durch** weiteres Aufweisen der folgenden Schritte:
iv.a) Verschlüsseln der Zugangscodedaten des Nutzers; und
iv.b) Übermitteln der Daten an einen Server (630).

24. Tastatur (100, 200, 300, 400, 500) zum Bereitstellen eines Zugangs zu elektronischen Dienstleistungen über einen sicheren Zugangscode, aufweisend: eine vorbestimmte Anzahl an Tasten zum Eingeben eines Zugangscodes (105, 110, 115, 120, 125; 205, 210, 215, 220, 225; 305, 310, 315, 320, 325; 405, 410, 415, 420, 425), wobei die Tastatur **dadurch gekennzeichnet ist, dass** mindestens zwei Variable jeder Taste zugeordnet sind und dem Nutzer angezeigt werden, wobei der Nutzer die Tasten aufeinanderfolgend entsprechend aller Variablen seines Zugangscodes auswählt, wobei die Variablen in der Lage sind, sich von einem Zugang zum anderen ändern, wobei die jeder ausgewählten Taste zugeordneten Werte mit einem in einer Datenbank gespeicherten Code verglichen werden und der Zugang zu den elektronischen Dienstleistungen dem Nutzer ermöglicht wird, falls die den Tasten zugeordneten Werte, wie sie aufeinanderfolgend durch den Nutzer ausgewählt worden sind, mit dem gespeicherten Zugangscode übereinstimmen.

25. Tastatur nach Anspruch 24, **dadurch gekennzeichnet, dass** die Variablen sich nach einer vorbestimmten Zeitdauer ändern können.

26. Tastatur nach einem der Ansprüche 24 bis 25, **dadurch gekennzeichnet, dass** die Tastatur eine virtuelle Tastatur ist.

27. Tastatur nach Anspruch 26, **dadurch gekennzeichnet, dass** die virtuelle Tastatur über eine grafische Nutzerschnittstelle angezeigt wird.

28. Tastatur nach einem der Ansprüche 24 bis 25, **dadurch gekennzeichnet, dass** die Tasten gegenständlich sind.

29. Tastatur nach Anspruch 28, die Tasten ausserhalb des Bildschirms angeordnet sind.

30. Tastatur nach Anspruch 29, die Variablen im Bildschirm angezeigt werden.

31. Tastatur nach einem der Ansprüche 24 bis 30, **dadurch gekennzeichnet, dass** sie fünf Tasten umfasst.

32. Tastatur nach einem der Ansprüche 24 bis 31, **dadurch gekennzeichnet, dass** die Variablen alphanumerische Zeichen sind.

33. Tastatur nach einem der Ansprüche 24 bis 31, **dadurch gekennzeichnet, dass** die Variablen Zahlen sind.

34. Tastatur nach einem der Ansprüche 24 bis 31, **dadurch gekennzeichnet, dass** die Variablen Buchstaben sind.

35. Tastatur nach einem der Ansprüche 24 bis 31, **dadurch gekennzeichnet, dass** die Variablen eine Kombination von Buchstaben und Zahlen sind.

36. Tastatur nach einem der Ansprüche 24 bis 31, **dadurch gekennzeichnet, dass** die Variablen Symbole sind.

37. Tastatur nach einem der Ansprüche 24 bis 31, **dadurch gekennzeichnet, dass** eine Gruppe von Variablen ausgewählt und jedem Nutzer angezeigt wird.

38. Tastatur nach Anspruch 37, **dadurch gekennzeichnet, dass** die Gruppe von Variablen mittels einer vorbestimmten Folge erzeugt wird.

39. Tastatur nach Anspruch 37, **dadurch gekennzeichnet, dass** die Gruppe von Variablen den Tasten gemäß einer zufälligen Folge einer Kombination von Werten zugeordnet ist.

40. Tastatur nach einem der Ansprüche 24 bis 39, **dadurch gekennzeichnet, dass** einem Nutzer eine vorbestimmte Tastatur angezeigt wird.

41. Tastatur nach einem der Ansprüche 24 bis 40, **dadurch gekennzeichnet, dass** die Tastatur in einem sicheren Zugangsendgerät implementiert ist.

42. Sicheres Zugangsendgerät zum Bereitstellen eines Zugangs zu elektronischen Dienstleistungen über einen sicheren Zugangscode, wobei das Endgerät eine grafische Nutzerschnittstelle aufweist, welche er einem Nutzer ermöglicht, auf gesicherte elektronische Information zuzugreifen, als auch eine Tastatur nach einem der Ansprüche 24 bis 41.

## Revendications

1. Procédé pour donner accès à des services électroniques via un code d'accès sécurisé, comprenant l'étape de : (i) fournir un clavier (100, 200, 300, 400, 500) comprenant un nombre prédéterminé de touches, qui sont utilisées pour saisir un code d'accès sécurisé, le procédé étant **caractérisé en ce qu'**il comprend en outre les étapes de :
(ii) associer au moins deux variables à chaque touche individuelle, dans lequel la valeur d'une ou plus desdites variables peut changer d'un accès à un autre ;
(iii) afficher les variables pour l'utilisateur ;
(iv) sélectionner, par l'utilisateur, chaque touche qui correspond à chaque variable de son code d'accès ;
(v) comparer les valeurs associées à chaque touche sélectionnée avec un code stocké dans une base de données ; et
(vi) laisser l'utilisateur accéder aux services électroniques, si les valeurs associées aux touches, telles qu'elles sont séquentiellement sélectionnées par l'utilisateur, correspondent au code d'accès stocké.

2. Procédé selon la revendication 1, **caractérisé en ce qu'**à l'étape (v) chaque valeur associée à chaque touche sélectionnée qui correspond à la portion correspondante du code d'accès de l'utilisateur est conservée, et **en ce qu'**à l'étape (vi) si les valeurs conservées pour les touches, telles qu'elles sont séquentiellement sélectionnées par l'utilisateur, correspondent au code d'accès stocké, alors l'utilisateur est autorisé à accéder aux services électroniques.

3. Procédé selon l'une quelconque des revendications 1 ou 2, **caractérisé en ce que** les variables de l'étape (ii) changent après une période de temps prédéterminée.

4. Procédé selon l'une quelconque des revendications 1 à 3, **caractérisé en ce que** le clavier est un clavier physique (500).

5. Procédé selon l'une quelconque des revendications 1 à 3, **caractérisé en ce que** le clavier est un clavier virtuel (100, 200, 300, 400).

6. Procédé selon la revendication 5, **caractérisé en ce que** le clavier virtuel est affiché par l'intermédiaire d'une interface utilisateur graphique.

7. Procédé selon l'une quelconque des revendications 5 ou 6, **caractérisé en ce que** le clavier virtuel est composé de cinq touches (105, 110, 115, 120, 125 ; 205, 210, 215, 220, 225 ; 305, 310, 315, 320, 325 ; 405, 410, 415, 420, 425).

8. Procédé selon l'une quelconque des revendications 1 à 7, **caractérisé en ce que** l'utilisateur est informé lorsque les touches sélectionnées et le code stocké ne correspondent pas.

9. Procédé selon l'une quelconque des revendications 1 à 8, **caractérisé en ce que** les services électroniques sont des fonctions bancaires.

10. Procédé selon l'une quelconque des revendications 1 à 9, **caractérisé en ce que** les variables sont des caractères alphanumériques.

11. Procédé selon l'une quelconque des revendications 1 à 9, **caractérisé en ce que** les variables sont des nombres.

12. Procédé selon l'une quelconque des revendications 1 à 9, **caractérisé en ce que** les variables sont des lettres.

13. Procédé selon l'une quelconque des revendications 1 à 9, **caractérisé en ce que** les variables sont une combinaison de lettres et de nombres.

14. Procédé selon l'une quelconque des revendications 1 à 9, **caractérisé en ce que** les variables sont des symboles.

15. Procédé selon l'une quelconque des revendications 1 à 14, **caractérisé en ce qu'**un groupe de variables est sélectionné et affiché pour chaque utilisateur.

16. Procédé selon la revendication 15, **caractérisé en ce que** le groupe de variables est généré par une séquence prédéterminée.

17. Procédé selon la revendication 15, **caractérisé en ce que** le groupe de variables est associé aux touches conformément à une séquence aléatoire de combinaison de valeurs.

18. Procédé selon l'une quelconque des revendications 1 à 17, **caractérisé en ce que** le procédé est mis en oeuvre dans un terminal à accès sécurisé.

19. Procédé selon l'une quelconque des revendications 1 à 18, **caractérisé en ce qu'**un clavier prédéterminé est affiché pour un utilisateur.

20. Procédé selon l'une quelconque des revendications 1 à 19, **caractérisé en ce que** comprenant en outre l'étape d'insérer une carte émise par une banque dans un terminal pour exécuter une transaction (605).

21. Procédé selon l'une quelconque des revendications 1 à 20, **caractérisé en ce que** comprenant en outre l'étape de demander le code d'accès de l'utilisateur (620).

22. Procédé selon la revendication 20 **caractérisé en ce que** comprenant en outre les étapes de :
transmettre les informations relatives à la carte à un serveur (610) ;
vérifier l'authenticité de la carte émise par une banque ; et
déterminer quel clavier afficher pour l'utilisateur (615).

23. Procédé selon l'une quelconque des revendications 1 à 22, **caractérisé en ce que** comprenant en outre les étapes de :
iv.a) crypter les données du code d'accès de l'utilisateur ; et
iv.b) transmettre les données à un serveur (630).

24. Clavier (100, 200, 300, 400, 500) pour donner accès à des services électroniques via un code d'accès sécurisé, comprenant :
un nombre prédéterminé de touches pour saisir un code d'accès (110, 115, 120, 125 ; 205, 210, 215, 220, 225 ; 305, 310, 315, 320, 325 ; 405, 410, 415, 420, 425 ; 500) ; le clavier étant **caractérisé en ce qu'**au moins deux variables sont associées à chaque touche et affichées pour l'utilisateur, dans lequel l'utilisateur sélectionne séquentiellement les touches correspondant à toutes les variables de son code d'accès, les variables étant capables de changer d'un accès à un autre, dans lequel les valeurs associées à chaque touche sélectionnée sont comparées avec un code stocké dans une base de données et l'accès aux services électroniques est autorisé à l'utilisateur, si les valeurs associées avec les touches, telles qu'elles sont séquentiellement sélectionnées par l'utilisateur, correspondent au code d'accès stocké.

25. Clavier selon la revendication 24, **caractérisé en ce que** les variables peuvent changer après une période de temps prédéterminée.

26. Clavier selon l'une quelconque des revendications 24 à 25, **caractérisé en ce que** le clavier est un clavier virtuel.

27. Clavier selon la revendication 26, **caractérisé en ce que** le clavier virtuel est affiché par l'intermédiaire d'une interface graphique utilisateur.

28. Clavier selon l'une quelconque des revendications 24 à 25, **caractérisé en ce que** les touches sont physiques.

29. Clavier selon la revendication 28, **caractérisé en ce que** les touches sont placées à l'extérieur de l'écran.

30. Clavier selon la revendication 29, **caractérisé en ce que** les variables sont affichées à l'intérieur de l'écran.

31. Clavier selon l'une quelconque des revendications 24 à 30, **caractérisé en ce qu'**il comprend cinq touches.

32. Clavier selon l'une quelconque des revendications 24 à 31, **caractérisé en ce que** les variables sont des caractères alphanumériques.

33. Clavier selon l'une quelconque des revendications 24 à 31, **caractérisé en ce que** les variables sont des nombres.

34. Clavier selon l'une quelconque des revendications 24 à 31, **caractérisé en ce que** les variables sont des lettres.

35. Clavier selon l'une quelconque des revendications 24 à 31, **caractérisé en ce que** les variables sont une combinaison de lettres et de nombres.

36. Clavier selon l'une quelconque des revendications 24 à 31, **caractérisé en ce que** les variables sont des symboles.

37. Clavier selon l'une quelconque des revendications 24 à 36, **caractérisé en ce qu'**un groupe de variables est sélectionné et affiché pour chaque utilisateur.

38. Clavier selon la revendication 37, **caractérisé en ce que** le groupe de variables est généré par une séquence prédéterminée.

39. Clavier selon la revendication 37, **caractérisé en ce que** le groupe de variables est associé aux touches conformément à une séquence aléatoire de combinaison de valeurs.

40. Clavier selon l'une quelconque des revendications 24 à 39, **caractérisé en ce qu'**un clavier prédéterminé est affiché pour un utilisateur.

41. Clavier selon l'une quelconque des revendications 24 à 40, **caractérisé en ce que** le clavier est mis en oeuvre dans un terminal à accès sécurisé.

42. Terminal à accès sécurisé pour donner accès à des services électroniques via un code d'accès sécurisé, le terminal comprenant une interface utilisateur graphique qui permet à un utilisateur d'accéder à des informations électroniques sécurisées, et un clavier selon l'une quelconque des revendications 24 à 41.
